# EUROPÄISCHE PATENTSCHRIFT

(11) **EP 0 756 299 B1**
(45) Veröffentlichungstag und Bekanntmachung des Hinweises auf die Patenterteilung: **13.09.2000**
(21) Anmeldenummer: 96250135.9
(22) Anmeldetag: 20.06.1996
(51) Int. Cl.: H01H 3/06, H02B 11/28, H02B 13/075

(54) **Verfahren zum Erden und Enterden von Mehrstellungsschaltern und Leistungsschaltern in Mittelspannungs-Schaltanlagen und Vorrichtung zur Durchführung desselben**
Method for earthing and de-earthing of multiposition switches and power switches for medium voltage switchgear and device for carrying out the same
Procédé pour connecter et déconnecter la terre de commutateurs à positions multiples et commutateurs de puissance dans des installations de commutation à moyenne tension et dispositif la mise en oeuvre du procédé

(30) Priorität: 30.06.1995 DE 19525121
(43) Veröffentlichungstag der Anmeldung: 29.01.1997
(73) Patentinhaber: SIEMENS AKTIENGESELLSCHAFT, 80333 München (DE)
(72) Erfinder: Kress, Claus, 36093 Künzell (DE)

(56) Entgegenhaltungen:
- DE-A- 3 213 243
- DE-A- 4 409 172

## Beschreibung

Die Erfindung betrifft ein Verfahren zum Erden/Enterden von Mehrstellungsschaltern und Leistungsschaltern in gekapselten Mittelspannungs-Schaltanlagen.

Aus der DE-OS 32 13 243 ist ein Schalthebel zur Einstellung eines Dreistellungsschalters bekannt, der bei aufeinanderfolgenden unterschiedlichen Schaltfolgen umgesteckt werden muß. Mit dem Umstrecken des Schalthebels werden jeweils unterschiedliche Schaltmechanismen ausgelöst. Diese sind dadurch gegeben, daß der Mehrstellungsschalter als Dreistellungsschalter anstelle der Schaltfolge AUS-EIN die Schaltfolge AUS-ERDE steuern muß.

Es ist in diesem Zusammenhang auch denkbar, statt des einen Schalthebels mit unterschiedlichen Steuerprofilen zwei unterschiedliche Schalthebel zur Realisierung dieser Schaltfolgen vorzusehen, die dann - je nach durchzuführenden Schaltfolgen - folgerichtig zur Betätigung eingesetzt werden müßten. Die verschiedenen Schaltfolgen könnten sich in diesen Fällen auch durch unterschiedliche Schwenkrichtungen des Schalthebels ergeben.
Die der Erfindung zugrundeliegende Aufgabe besteht darin, die Handhabung zur Steuerung derartiger Mehrstellungsschalter in Verbindung mit Mittelspannungs-Schaltanlagen erheblich zu vereinfachen und insbesondere Fehlbedienungen durch unsachgemäße Handhabungsreihenfolgen bei diesen Steuervorgängen völlig auszuschließen, ohne jedoch die Sicherheitsbedingungen und die anlagenbedingten Schaltreihenfolgen einzuschränken bzw. zu verändern.

Erfindungsgemäß wird dies durch ein Verfahren zum Erden mit folgenden Merkmalen erreicht:
Die Betätigung eines Doppelbartschlüssels durch Stecken und Drehen entgegen dem Uhrzeigersinn bewirkt bei gespannter Einschaltfeder des Leistungsschalterantriebs die Freigabe einer Verschlußklappe der Erderwelle zur Aufnahme eines Schaltschlüssels zur Erderbetätigung,
durch Stecken und Drehen des Schaltschlüssels gleich dem Uhrzeigersinn wird nach Erreichen eines ersten Schaltwinkels von ca. 20° die Einschaltung des Leistungsschalterantriebs gesperrt,
durch weiteres Drehen des Schaltschlüssels wird nach Erreichen eines zweiten Schaltwinkels im Bereich von ca. 40° bis ca. 140° der Mehrstellungsschalter von einer "Neutralstellung" in die "Erdstellung" geschaltet,
nach Erreichen eines dritten Schaltwinkels im Bereich von ca. 155° wird die Einschaltung des Leistungsschalterantriebs freigegeben,
nach Erreichen eines vierten Schaltwinkels im Bereich von ca. 170° wird der Leistungsschalter durchgeschaltet und seine Ausschaltung gesperrt,
nach Erreichen eines fünften Schaltwinkels im Bereich von 180° ist der Abzweig geerdet,
mit dem Abziehen des Schaltschlüssels und des Doppelbartschlüssels ist die Verschlußklappe der Erderwelle verschlossen.

Als wesentlich für das Verfahren ist anzusehen, daß die Handhabung zum Erden selbst mit einem einzigen Schaltschlüssel erfolgt und daß die einzelnen Funktionsabläufe als sogenannte Zwangsfolgeschaltung durch eine einzige Halbdrehung - also eine Drehung mit einem Schaltwinkel von 180° - in einer Richtung erfolgt. Die Freigabe zur Erderbetätigung durch Öffnen der Verschlußklappe ganz zu Beginn des Schaltfolgenablaufs wird durch Stecken und Drehen des Doppelbartschlüssels erreicht, wobei die Freigabe jedoch nur dann erfolgt, wenn die Einschaltfeder innerhalb des Leistungsschalterantriebs gespannt ist.
Das erfindungsgemäße Verfahren ist also wegen seiner sehr einfachen Bedienungsweise - ein einziger Schaltschlüssel mit einer 180°-Drehung in einer einzigen Richtung ohne Umstecken und/oder Drehrichtungswechsel - zum fehlerfreien Schalten von Mehrstellungsschaltern, insbesondere von Dreistellungsschaltern in Mittelspannungs-Schaltanlagen, in besonderer Weise geeignet.

Das Verfahren zum Enterden wird durch die folgenden Merkmale erreicht:
die anschließende Betätigung des Doppelbartschlüssels durch Stecken und Drehen entgegen dem Uhrzeigersinn bewirkt bei gespannter Einschaltfeder des Leistungsschalterantriebs das Öffnen der Verschlußklappe der Erderwelle zur Aufnahme des Schaltschlüssels zur Erderbetätigung,
durch Stecken und Drehen des Schaltschlüssels entgegen dem Uhrzeigersinn wird nach Erreichen eines ersten Rückschaltwinkels im Bereich von ca. 170° die Ausschaltung des schalterantriebs entsperrt und im Bereich von ca. 160° der Leistungsschalter ausgeschaltet und die Einschaltung des Leistungsschalteantriebes gesperrt,
durch ein weiteres Drehen des Schaltschlüssels wird nach Erreichen eines zweiten Rückschaltwinkels im Bereich von ca. 140° bis 40° der Mehrstellungsschalter von der "Erdstellung" in die "Neutralstellung" geschaltet,
und nach Erreichen eines dritten Rückschaltwinkels im Bereich von ca. 20° die Einschaltung des Leistungsschalterantriebs freigegeben,
nach Erreichen eines vierten Rückschaltwinkels im Bereich von 0° ist der Abzweig enterdet,
mit dem Abziehen des Schaltschlüssels und des Doppelbartschlüssels ist die Verschlußklappe der Erderwelle verschlossen.

Auch hierbei ist der Schaltschlüssel mit dem Rückschaltwinkel im Bereich von ca. 180° - also in umgekehrter Drehrichtung zum Erden - mit einer einzigen Halbdrehung ohne Unterbrechung durch Umsteck- und/oder Drehrichtungswechsel zu betätigen, um den Enterdervorgang in ebenfalls Zwangsfolgeschritten zu realisieren.

Die Vorrichtung zur Durchführung des Verfahrens nach den Ansprüchen 1 und 2 sieht die folgenden Merkmale vor: die Vorrichtung enthält eine Feder-Gespannt-Abfrageeinrichtung zur Überwachung der Einschaltfeder des Leistungsschalterantriebs,
die Vorrichtung enthält eine Einschaltsperreinrichtung zur Sperrung der Einschaltung des Leistungsschalterantriebs,
die Vorrichtung enthält eine Einschaltauslöseeinrichtung zur Auslösung der Einschaltung und zur Blockierung der Ausschaltung des Leistungsschalterantriebs,
die Vorrichtung enthält eine Trennerwellen-Sperreinrichtung zur Sperrung des Zugangs zur Trennerwelle und zur Erderwelle des Mehrstellungsschalters,
die Vorrichtung enthält eine Freigabeschalteinrichtung zur selektiven Freigabe des Zugangs zur Trennerwelle und zur Erderwelle des Mehrstellungsschalters.

Die einzelnen Funktionseinrichtungen der Vorrichtung und deren funktionelle mechanische Verknüpfungen untereinander bilden die Voraussetzung zur fehlerfreien Realisierung der Schaltfolgen mit den an sich bekannten Ausschließlichkeitsbedingungen für derartige Schaltanlagen. So überwacht beispielsweise die Feder-Gespannt-Abfrageeinrichtung die Einschaltfeder des Leistungsschalterantriebs auf ihren Gespanntzustand, weil nur im gespannten Zustand der Einschaltfeder eine Schaltfolge für den Leistungsschalterantrieb durch geführt werden kann.
Die Einschaltsperreinrichtung, die Einschaltauslöseeinrichtung, die Trennerwellen-Sperreinrichtung und die Freigabeschalteinrichtung bilden in ihrer Gesamtheit die Vorrichtung, mit der das erfindungsgemäße Verfahren in Zwangsfolge steuerbar ist.

Die erfindungsgemäßen Verfahrensschritte sind in den Figuren 1 und 2 durch die Bilder 1 bis 11 und 12 bis 22 im einzelnen dargestellt, während die Figuren 3 bis 14 die einzelnen Funktionseinheiten der Vorrichtung zur Durchführung des erfindungsgemäßen Verfahrens als konstruktive Lösung jeweils in der Vorder- und der Seitenansicht zeigen.

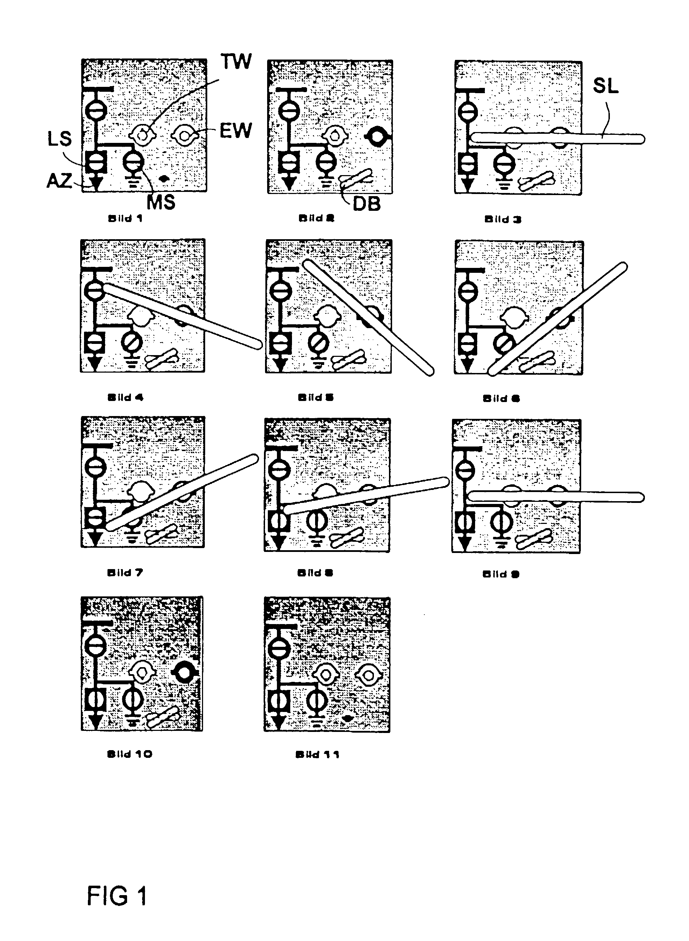

In der Figur 1 ist im Bild 1 der Mehrstellungsschalter MS als Symbol dargestellt, der im Zusammenhang mit dem Leistungsschalter LS den Abzweig AZ erden bzw. enterden soll. Außerdem ist in Bild 1 die Erderwelle EW und die Trennerwelle TW abgebildet. In den Bildern 2 und 3 der Figur 1 sind der Doppelbartschlüssel DB und der eigentliche Schaltschlüsse SL dargestellt.

Das Bild 1 zeigt den Dreistellungsschalter in seiner "Neutralstellung". Um den Vorgang Erden des Abzweigs einzuleiten, ist der Doppelbartschlüssel DB in die dafür vorgesehene Schlüsselaufnahme einzustecken. Durch eine kurze Drehung entgegen dem Uhrzeigersinn wird in Übereinstimmung mit einer gespannten, hier nicht dargestellten Einschaltfeder des Leistungsschalterantriebes die Verschlußklappe der Erderwelle EW geöffnet (Bild 2).
In Bild 3 ist dargestellt, daß der Schaltschlüsses SL zur Erderbetätigung auf die nunmehr freigegebene Erderwelle EW aufsteckbar ist. Durch Drehen des Schaltschlüssels SL gleich dem Uhrzeigersinn wird nach Erreichen des ersten Schaltwinkels von ca. 20° die Einschaltung des Leistungsschalterantriebs gesperrt (Bild 4).
Durch weiteres Drehen des Schaltschlüssels SL wird nach Erreichen des Schaltwinkels im Bereich von ca. 40° bis ca. 140° der Mehrstellungsschalter von seiner "Neutralstellung" in die Erdstellung geschaltet (Bild 5, 6).
Anschließend nach Erreichen des Schaltwinkels im Bereich von ca. 155° wird die Einschaltung des Leistungsschalterantriebs freigegeben (Bild 7).
Nach Erreichen des Schaltwinkels im Bereich von ca. 170° wird der Leistungsschalter LS durchgeschaltet und seine Ausschaltung gesperrt (Bild 8).
Nach dem Erreichen des Schaltwinkels im Bereich von 180° ist der Abzweig AZ geerdet (Bild 9), und mit dem Abziehen des Schaltschlüssels SL und des Doppelbartschlüssels DB ist die Verschlußklappe der Erderwelle EW wieder verschlossen (Bild 10, 11).

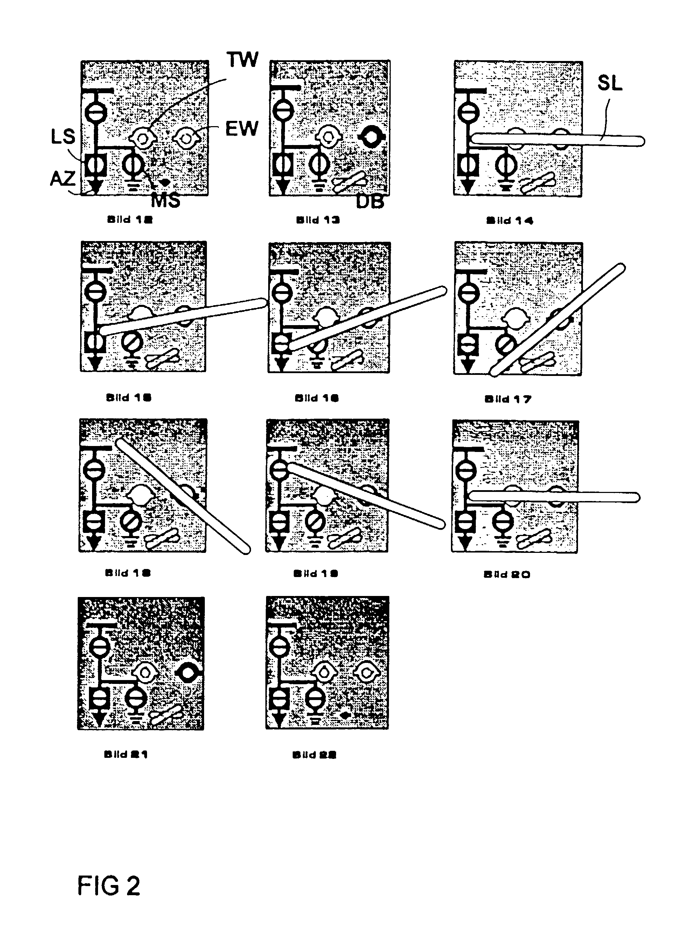

In der Figur 2 sind in den Bildern 12 bis 22 ebenfalls die Erderwelle EW, die Trennerwelle TW, der Mehrstellungsschalter MS, sowie der Leistungsschalter LS mit dem Abzweig AZ dargestellt, und der Doppelbartschlüssel DB sowie der Schaltschlüssel SL in seiner jeweiligen Lage erkennbar.
In der Figur 2, Bild 12 ist der Mehrstellungsschalter MS in der "Erdstellung" dargestellt, d. h. der Abzweig AZ ist durch den Mehrstellungsschalter MS mit Erdpotential verbunden. Voraussetzung zum Enterden des Abzweigs ist es, eventuelle mechanische Sperrungen durch sonstige Verschließeinrichtungen aufzuheben und durch Stecken und Drehen des Doppelbartschlüssels entgegen dem Uhrzeigersinn im Zusammenwirken mit der gespannten Einschaltfeder des Leistungsschalterantriebs das Öffnen der Verschlußklappe der Erderwelle DW wieder zur Aufnahme des Schaltschlüssels SL freizugeben (Bild 13).
Im Bild 14 ist der Schaltschlüssel SL auf die Trennerwelle TW aufgesteckt, so daß durch Drehen des Schaltschlüssels SL entgegen dem Uhrzeigersinn nach Erreichen des Rückschaltwinkels im Bereich von ca. 170° die Ausschaltung des Leistungsschalterantriebes entsperrt (Bild 15) und im Bereich von ca. 160° der Leistungsschalter LS ausgeschaltet und das Einschalten des Leistungsschalterantriebs gesperrt ist (Bild 16).

Beim Erreichen des Schaltwinkels im Bereich von ca. 140° bis 40° wird der Mehrstellungsschalter von der "Erdstellung" in die "Neutralstellung" geschaltet (Bild 17, 18). Nach Erreichen des Rückschaltwinkels im Bereich von ca. 20° ist die Einschaltung des Leistungsschalterantriebs wieder freigegeben (Bild 19), und mit dem Erreichen des Rückschaltwinkels im Bereich von 0° ist der Abzweig wieder enterdet (Bild 20). Nach dem Abziehen des Schaltschlüssels SL und des Doppelbartschlüssels DB ist die Verschlußklappe der Erderwelle EW wieder verschlossen (Bild 21, 22).

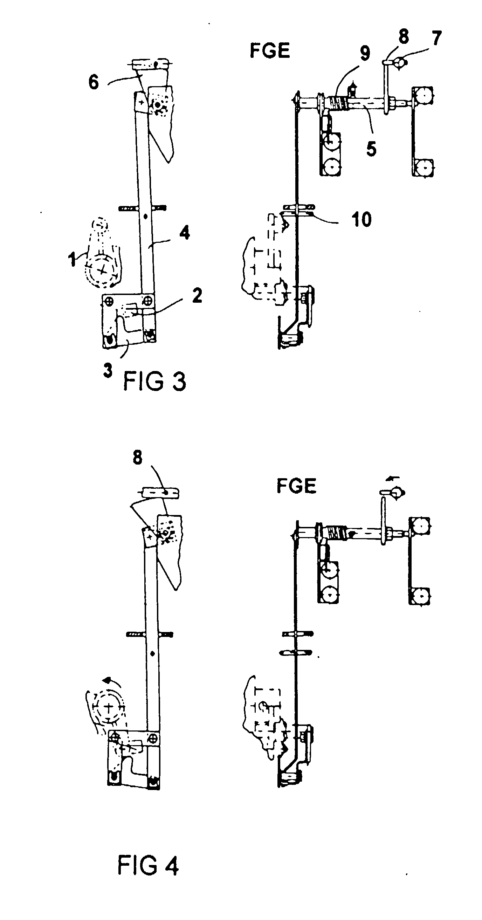

Die Figuren 3 und 4 zeigen die Feder-Gespannt-Abfrageeinrichtung FGA jeweils in der Vorder- und Seitenansicht, wobei die Figur 3 den Zustand der ungespannten Einschaltfeder darstellt, während die Figur 4 die Feder-Gespannt-Abfrageeinrichtung im Zustand der gespannten Einschaltfeder des Leistungsschalterantriebs darstellt. Während des hier nicht dargestellten Spannvorganges der Einschaltfeder des Leistungsschalterantriebs läuft die Rolle 1 in Pfeilrichtung (Figur 4) über die Schräge des Hebels 3 und zieht kurz vor Erreichen seiner Endlage an der Klinke 2 die Stange 4 nach unten. Diese Stellung bleibt bis zum Einschalten des Leistungsschalterantriebs erhalten. Die Stange 4 ist am oberen Ende drehbar mit der Welle 5 verbunden. Diese wird durch das Ziehen an der Stange 4 verdreht. Fest mit der Welle 5 verschraubt ist das einstellbare Stellblech 6. Das Stellblech 6 ermöglicht nur in dieser Lage ein Verdrehen der Welle 7. Ist die Einschaltfeder des Leistungsschalterantriebs entspannt - die Rolle 1 steht in der Ausgangsposition, Figur 3 - so blockiert das Stellblech 6 den Spannstift 8 und verhindert somit ein Verdrehen der Welle 7. Die Drehfeder 9 bringt die Rückstellkraft auf, um in die Ausgangsposition zurückzuführen, während der Spannstift 10 den Endanschlag für die Hubbewegung der Stange 4 bildet.

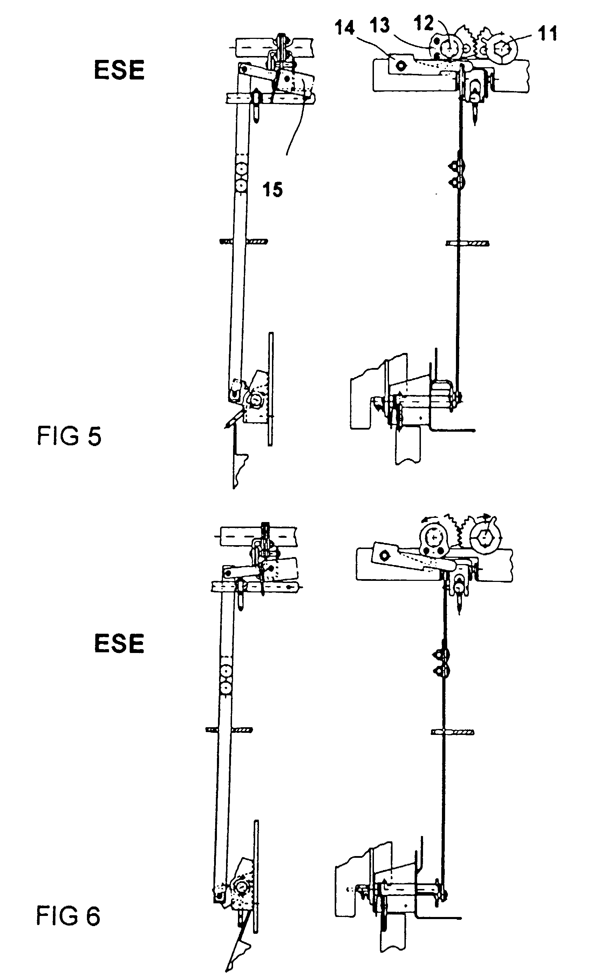

Die Einschaltsperreinrichtung ESE zur Sperrung der Einschaltung des Leistungsschalterantriebs - Figur 5, 6 - enthält die Erderwelle 11 und die Trennerwelle 12, die über ein nicht bezeichnetes Zahnräderpaar festgekoppelt sind. Ebenfalls fest mit der Trennerwelle 12 ist die Kurvenscheibe 13 verbunden, die das Schaltblech 14, das seinerseits auf den Kipphebel 15 einwirkt, und somit die Einschaltung des Leistungsschalterantriebs verhindert. Durch Drehen der Erderwelle 11 im Uhrzeigersinn - Einlegend es Erders - wird die Trennerwelle 12 durch die Zahnräder entgegen dem Uhrzeigersinn bewegt.

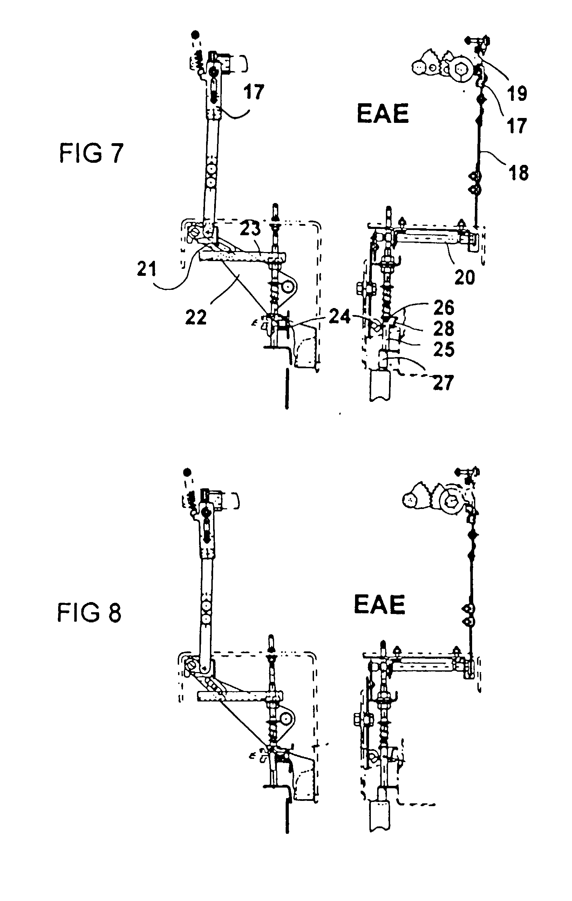

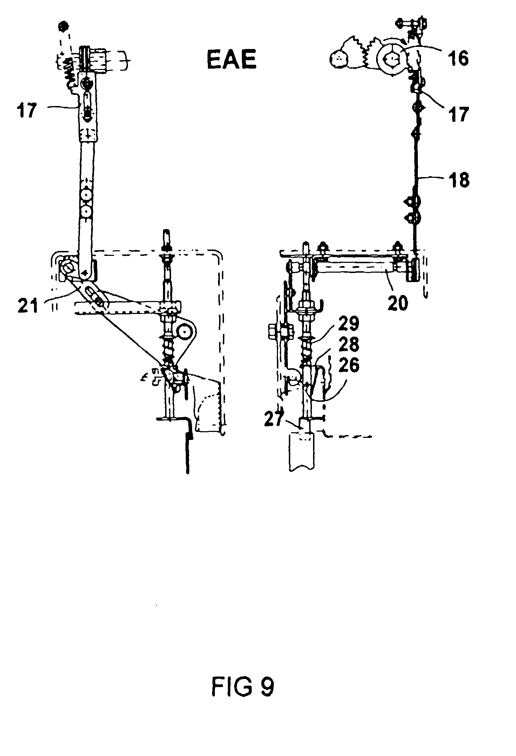

Die Figuren 7, 8 und 9 zeigen die Einschaltauslöseeinrichtung EAE in den wesentlichen Betriebszuständen. Sie dient zur Auslösung der Einschaltung und zur Blockierung der Ausschaltung des Leistungsschalterantriebs. Nach der Freigabe der Einschaltung des Leistungsschalterantriebs durch die Kurvenscheibe 13 (Figuren 5, 6) wird über das Schaltblech 16 (Figur 9) der Schieber 17 und die Schaltstange 18 gegen die Feder 19 nach unten bewegt. Hierdurch wird die Welle 20 verdreht. Der Hebel 21 der Welle 20 betätigt einerseits den Schalthebel 22, andererseits mit seiner Außenkante die Verlängerung 23. Der Schalthebel 22 betätigt daraufhin die Schalthülse 24 und löst somit die Einschaltung des Leistungsschalterantriebs aus. Gleichzeitig bewegt sich die Riegelwelle 25, die fest mit der Verlängerung 23 verbunden ist, nach unten , und verdreht durch den Spannstift 26 die Schalthülse 24 und blockiert mit dem angeschweißte Riegelblech 27 die Ausschaltung. Im weiteren Verlauf der Einschaltbewegung wird die Schalthülse 24 weiterverdreht, bis sie an der angefrästen Fläche entlang des Schalthebels 22 zurückgleiten kann. Die Rückstellkraft zur Bewegung in die Ausgangsposition wird mittels der Zugfeder 28 aufgebracht. Als Endanschlag für die Schalthülse 24 ist die Riegelwelle 25 vorgesehen.

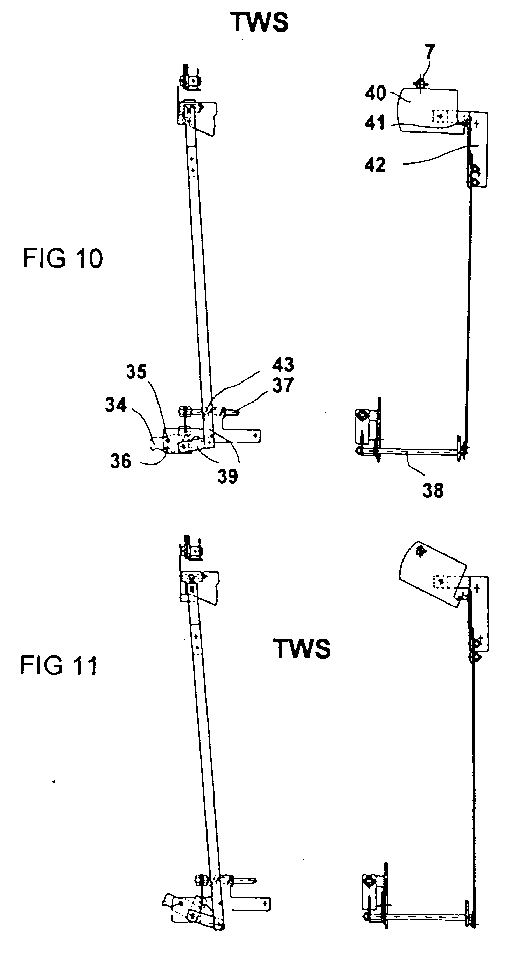

Die Figuren 10 und 11 zeigen die Trennerwellen-Sperreinrichtung TWS in den zwei Ausgangspositionen zur Sperrung des Zugangs der Trennerwelle und der Erderwelle des Mehrstellungsschalters. Durch Anheben des Hebels 34 bis zur fluchtenden Deckung der Löcher 35, 36 wird die Stange 37 annähernd horizontal verschoben und damit die AUS-Klinke in ihrer Lage fixiert. Gleichermaßen wird die Welle 38 verdreht, die über einen angeschweißten Hebel das Gestänge 39 betätigt. Die Blende 40 wird über den angeschweißten Bolzen 41 so bewegt, daß die Öffnung der Welle 7 komplett verschlossen ist. Das Lagerblech 42 lagert die Blende 40 und stellt die Längsführung des Gestänges 39 dar. Dieser Sperrzustand kann durch Einhängen eines Vorhängeschlosses in die fluchtenden Löcher 35, 36 auf Dauer aufrechterhalten werden. Die Rückschaltkraft wird mit der Feder 43 realisiert. Ein wirksames Einsetzen des Vorhängeschlosses ist nur bei abgezogenen Doppelbartschlüssel möglich, während bei gesteckten Doppelbartschlüssel nur das Entfernen des Vorhängeschlosses ermöglicht ist.

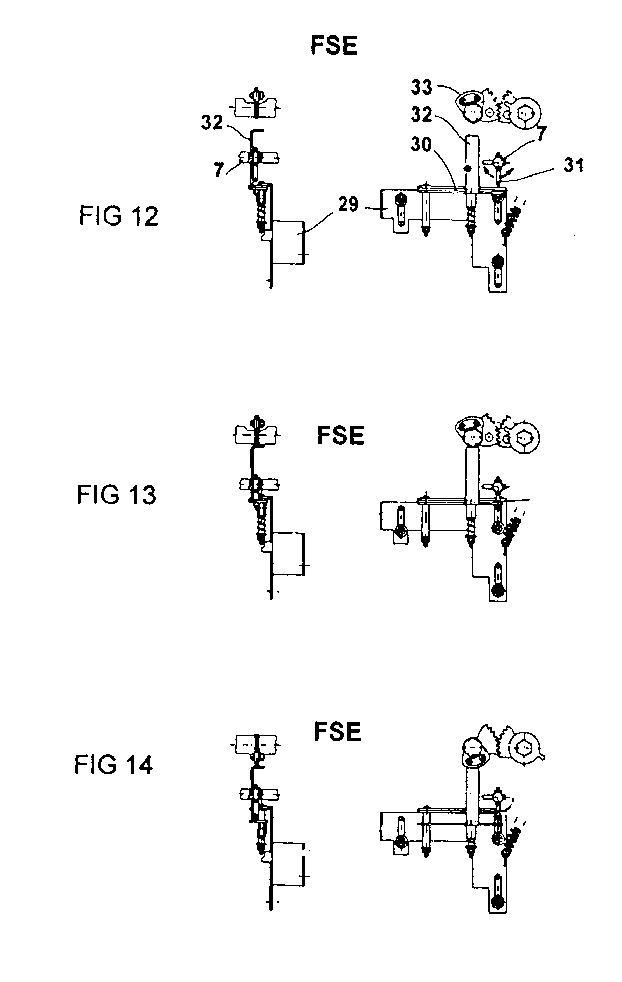

Die Figuren 12, 13 und 14 zeigen die Freigabeschalteinrichtung FSE zur selektiven Freigabe des Zuganges zur Trennerwelle und zur Erderwelle des Mehrstellungsschalters. Wie bereits eingangs erwähnt, ist nach Stecken des Doppelbartschlüssels und einer entsprechenden Drehung desselben die Erderwelle durch Betätigung der Verschlußklappe freigegeben, obwohl der Leistungsschalter selbst noch eingeschaltet ist. Dies wird dadurch bewirkt, daß in der "Neutralstellung" beim Einschalten des Leistungsschalters der Schieber 29 nach oben geschoben wird, wodurch der Sperrbolzen 31 in die Sperre 30 und in den beweglichen Teil der Sperre 32 eintaucht. In dieser Schaltstellung ist ein Verdrehen der Welle 7, und somit die Freigabe der Trenner- oder Erderöffnung, nicht möglich. In der "Erdstellung" wird beim Einschalten des Leistungsschalters der bewegliche Teil der Sperre 32 durch die Kurvenscheibe 33 gedrückt gehalten, wodurch ein Öffnen der Erderöffnung möglich wird.

Durch das Drehen des Schaltschlüssels entgegen dem Uhrzeigersinn wird zunächst über das Schaltblech 16 (Figuren 7, 8, 9) die Rückstellung eingeleitet. Die Zugfeder 19 bringt somit den Einschaltmechanismus in die Ausgangsstellung zurück. In dieser Stellung kann die Schalthülse 24 durch Entspannen der Zugfeder 28 ihre Ausgangslage wieder erreichen. Durch Entspannen der Druckfeder 29 hat auch die Riegelwelle 25 ihre Ausgangsstellung wieder erreicht und die Ausschaltung ist somit nicht mehr gesperrt.

Das Ausschalten des Leistungsschalters durch Sperrung seiner Einschaltung bewirkt, daß durch die Kurvenscheibe 13 über das Schaltblech 14 der Kipphebel 15 nach unten gedrückt wird, und so die Ausschaltung des Leistungsschalters durchgeführt und die Einschaltung gesperrt ist (Figur 5, 6). Kurz vor Erreichen der "Neutralstellung" wird über die Kurvenscheibe 13 die Ausgangsstellung wieder hergestellt.

## Patentansprüche

1. Verfahren zum Erden von Mehrstellungsschaltern und Leistungsschaltern in gekapselten Mittelspannungs-Schaltanlagen, **gekennzeichnet durch** die Merkmale
1.1. Die Betätigung eines Doppelbartschlüssels (DB) durch Stecken und Drehen entgegen dem Uhrzeigersinn bewirkt bei gespannter Einschaltfeder des Leistungsschalterantriebs die Freigabe einer Verschlußklappe der Erderwelle (EW) zur Aufnahme eines Schaltschlüssels (SL) zur Erderbetätigung, [Bild 2]
1.2. durch Stecken und Drehen des Schaltschlüssels (SL) gleich dem Uhrzeigersinn wird nach Erreichen eines ersten Schaltwinkels von ca. 20° die Einschaltung des Leistungsschalterantriebs gesperrt, [Bild 4]
1.3. durch weiteres Drehen des Schaltschlüssels (SL) wird nach Erreichen eines zweiten Schaltwinkels im Bereich von ca. 40° bis ca. 140° der Mehrstellungsschalter (MS) von einer "Neutralstellung" in die "Erdstellung" geschaltet, [Bild 5/6]
1.4. nach Erreichen eines dritten Schaltwinkels im Bereich von ca. 155° wird die Einschaltung des Leistungsschalterantriebs freigegeben, [Bild 7]
1.5. nach Erreichen eines vierten Schaltwinkels im Bereich von ca. 170° wird der Leistungsschalter (LS) durchgeschaltet und seine Ausschaltung gesperrt, [Bild 8]
1.6. nach Erreichen eines fünften Schaltwinkels im Bereich von 180° ist der Abzweig geerdet, [Bild 9]
1.7. mit dem Abziehen des Schaltschlüssels (SL) und des Doppelbartschlüssels (DB) ist die Verschlußklappe der Erderwelle (EW) verschlossen.

2. Verfahren zum Enterden von Mehrstellungsschaltern und Leistungsschaltern in gekapselten Mittelspannungs-Schaltanlagen nach Anspruch 1,
**gekennzeichnet durch** die Merkmale
2.1. die anschließende Betätigung des Doppelbartschlüssels (DB) durch Stecken und Drehen entgegen dem Uhrzeigersinn bewirkt bei gespannter Einschaltfeder des Leistungsschalterantriebs das Öffnen der Verschlußklappe der Erderwelle (EW) zur Aufnahme des Schaltschlüssels (SL) zur Erderbetätigung, [Bild 13]
2.2. durch Stecken und Drehen des Schaltschlüssels (SL) entgegen dem Uhrzeigersinn wird nach Erreichen eines ersten Rückschaltwinkels im Bereich von ca. 170° die Ausschaltung des Leistungsschalterantriebs entsperrt [Bild 15] und im Bereich von ca. 160° der Leistungsschalter (LS) ausgeschaltet und die Einschaltung des Leistungsschalterantriebes gesperrt, [Bild 16]
2.3. durch ein weiteres Drehen des Schaltschlüssels (SL) wird nach Erreichen eines zweiten Rückschaltwinkels im Bereich von ca. 140° bis 40° der Mehrstellungsschalter (MS) von der "Erdstellung" in die "Neutralstellung" geschaltet, [Bild 17/18] und nach Erreichen eines dritten Rückschaltwinkels im Bereich von ca. 20° die Einschaltung des Leistungsschalterantriebs freigegeben, [Bild 19]
2.4. nach Erreichen eines vierten Rückschaltwinkels im Bereich von 0° ist der Abzweig enterdet, [Bild 20]
2.5. mit dem Abziehen des Schaltschlüssels (SL) und des Doppelbartschlüssels (DB) ist die Verschlußklappe der Erderwelle (EW) verschlossen. [Bild 21, 22]

3. Vorrichtung zur Durchführung des Verfahrens nach den Ansprüchen 1 und 2,
**gekennzeichnet durch** die Merkmale
3.1. die Vorrichtung enthält eine Feder-Gespannt-Abfrageeinrichtung (FGA) zur Überwachung der Einschaltfeder des Leistungsschalterantriebs,
3.2. die Vorrichtung enthält eine Einschaltsperreinrichtung (ESE) zur Sperrung der Einschaltung des Leistungsschalterantriebs,
3.3. die Vorrichtung enthält eine Einschaltauslöseeinrichtung (EAE) zur Auslösung der Einschaltung und zur Blockierung der Ausschaltung des Leistungsschalterantriebs,
3.4. die Vorrichtung enthält eine Trennerwellen-Sperreinrichtung (TWS) zur Sperrung des Zugangs zur Trennerwelle (TW) und zur Erderwelle (EW) des Mehrstellungsschalters,
3.5. die Vorrichtung enthält eine Freigabeschalteinrichtung (FSE) zur selektiven Freigabe des Zugangs zur Trennerwelle (TW) und zur Erderwelle (EW) des Mehrstellungsschalters.

## Claims

1. A method for earthing multi-position switches and circuit breakers in enclosed medium voltage switchgear, characterised by the features
1.1. The actuation of a double burr key (DB) by insertion and anticlockwise rotation effects, with the switching-on spring of the circuit breaker drive tensioned, the release of a shut-off valve of the earth shaft (EW) for receiving a switching key (SL) for earthing actuation, (Diagram 2)
1.2. by way of insertion and clockwise rotation of the switching key (SL), after reaching a first switching angle of approx. 20°, the switching-on of the circuit breaker drive is blocked, (Diagram 4)
1.3. by way of a further rotation of the switching key (SL), after reaching a second switching angle in the region of approx. 40° to approx. 140°, the multi-position switch (MS) is switched from a "neutral position" into the "earth position", (Diagrams 5/6)
1.4. after reaching a third switching angle in the region of approx. 155°, the switching on of the circuit breaker drive is released, (Diagram 7)
1.5. after reaching a fourth switching angle in the region of approx. 170°, the circuit breaker (LS) is connected through and its switching off is blocked, (Diagram 8)
1.6. after reaching a fifth switching angle in the region of 180°, the branch is earthed, (Diagram 9)
1.7. with the removal of the switching key (SL) and the double burr key (DB), the shut-off valve of the earth shaft (EW) is closed.

2. A method for unearthing multi-position switches and circuit breakers in enclosed medium voltage switchgear according to claim 1, characterised by the features
2.1. the subsequent actuation of the double burr key (DB) by insertion and anticlockwise rotation effects, with the switching-on spring of the circuit breaker drive tensioned, the opening of the shut-off valve of the earth shaft (EW) for receiving the switching key (SL) for earthing actuation, (Diagram 13)
2.2. by way of insertion and anticlockwise rotation of the switching key (SL), after reaching a first restoring angle in the region of approx. 170°, the switching off of the circuit breaker drive is released (Diagram 15) and in the region of approx. 160° the circuit breaker (LS) is switched off and the switching on of the circuit breaker drive is blocked, (Diagram 16)
2.3. by way of a further rotation of the switching key (SL), after reaching a second restoring angle in the region of approx. 140° to 40°, the multi-position switch (MS) is switched from the "earth position" into the "neutral position", (Diagrams 17/18) and after reaching a third restoring angle in the region of approx. 20°, the switching on of the circuit breaker drive is released, (Diagram 19)
2.4. after reaching a fourth restoring angle in the region of 0°, the branch is unearned, (Diagram 20)
2.5. with the removal of the switching key (SL) and the double burr key (DB), the shut-off valve of the earth shaft (EW) is closed. (Diagrams 21, 22)

3. A device for carrying out the method according to claims 1 and 2, characterised by the features
3.1. the device comprises a spring-tensioned-interrogation device (FGA) for monitoring the switching-on spring of the circuit breaker drive,
3.2. the device comprises a switching-on blocking device (ESE) for blocking the switching on of the circuit breaker drive,
3.3. the device comprises a switching-on triggering device (EAE) for triggering the switching on and for blocking the switching off of the circuit breaker drive,
3.4. the device comprises an isolator shaft blocking device (TWS) for blocking the access to the isolator shaft (TW) and the earth shaft (EW) of the multi-position switch,
3.5. the device comprises a release switching device (FSE) for selectively releasing the access to the isolator shaft (TW) and the earth shaft (EW) of the multi-position switch.

## Revendications

1. Procédé pour connecter à la terre des commutateurs à plusieurs positions et des disjoncteurs dans des installations de commutation à moyenne tension,
**caractérisé** par les caractéristiques suivantes
1.1 l'actionnement d'une clé (DB) à panneton double, en l'enclenchant et la faisant tourner dans le sens anti-horaire, produit, le ressort de mise en circuit de l'entraînement du disjoncteur étant tendu, le déblocage d'un volet de fermeture de l'arbre (EW) de prise de terre, destiné à recevoir une clé (SL) de commutation pour actionner la prise de terre, [Illustration 2]
1.2 en enclenchant et faisant tourner la clé (SL) de commutation dans le sens horaire, on bloque, à l'atteinte d'un premier angle de commutation d'environ 20°, la mise en circuit de l'entraînement du disjoncteur, [Illustration 4]
1.3 en poursuivant la rotation de la clé (SL) de commutation, le commutateur (MS) à plusieurs positions est, à l'atteinte d'un deuxième angle de commutation dans la plage d'environ 40° à environ 140°, commuté d'une " position neutre " dans la " position de mise à la terre ", [Illustrations 5/6]
1.4 à l'atteinte d'un troisième angle de commutation, dans la plage d'environ 155°, la mise en circuit de l'entraînement du disjoncteur est débloquée, [Illustration 7]
1.5 à l'atteinte d'un quatrième angle de commutation, dans la plage d'environ 170°, le disjoncteur (LS) est connecté et sa mise hors circuit bloquée, [Illustration 8]
1.6 à l'atteinte d'un cinquième angle de commutation, dans la plage de 180°, la dérivation est mise à la terre, [Illustration 9]
1.7 après avoir retiré la clé (SL) de commutation et la clé (DB) à panneton double, le volet de fermeture de l'arbre (EW) de prise de terre est fermé.

2. Procédé pour déconnecter de la terre des commutateurs à plusieurs positions et de disjoncteurs dans des installations blindées de commutation à moyenne tension, suivant la revendication 1, **caractérisé** par les caractéristiques suivantes
2.1 l'actionnement consécutif de la clé (DB) à panneton double, en l'enclenchant et la faisant tourner dans le sens anti-horaire, produit, le ressort de mise en circuit de l'entraînement du disjoncteur étant tendu, l'ouverture du volet de fermeture de l'arbre (EW) de prise de terre, destiné à recevoir la clé (SL) de commutation pour actionner la prise de terre, [Illustration 13]
2.2 en enclenchant et faisant tourner la clé (SL) de commutation dans le sens anti-horaire, on débloque, à l'atteinte d'un premier angle de commutation en retour dans la plage d'environ 170°, la mise hors circuit de l'entraînement du disjoncteur, [Illustration 15] et dans la plage d'environ 160°, le disjoncteur (LS) est mis hors circuit et la mise en circuit de l'entraînement du disjoncteur est bloquée, [Illustration 16]
2.3 en poursuivant la rotation de la clé (SL) de commutation, le commutateur (MS) à plusieurs positions est, à l'atteinte d'un deuxième angle de commutation en retour dans la plage d'environ 140° à 40°, commuté de la " position de mise à la terre " dans la " position neutre ", [Illustration 17 /18] et à l'atteinte d'un troisième angle de commutation en retour dans la plage d'environ 20°, la mise en circuit de l'entraînement du disjoncteur est débloquée, [Illustration 19]
2.4 à l'atteinte d'un quatrième angle de commutation, dans la plage de 0°, la dérivation est déconnectée de la terre, [Illustration 20]
2.5 après avoir retiré la clé (SL) de commutation et la clé (DB) à panneton double, le volet de fermeture de l'arbre (EW) de prise de terre est fermé. [Illustrations 21, 22]

3. Dispositif pour la mise en oeuvre du procédé suivant les revendications 1 et 2, **caractérisé** par les caractéristiques suivantes
3.1 le dispositif comporte une unité (FGA) d'interrogation de tension de ressort, pour surveiller le ressort de mise en circuit de l'entraînement du disjoncteur,
3.2 le dispositif comporte une unité (ESE) de blocage de mise en circuit, pour bloquer la mise en circuit de l'entraînement du disjoncteur,
3.3 le dispositif comporte une unité (EAE) de déclenchement de mise en circuit, pour déclencher la mise en circuit et bloquer la mise hors circuit de l'entraînement du disjoncteur,
3.4 le dispositif comporte une unité (TWS) de blocage des arbres du disjoncteur, pour bloquer l'accès à l'arbre (TW) de disjoncteur et à l'arbre (EW) de prise de terre du commutateur à plusieurs positions,
3.5 le dispositif comporte une unité (FSE) de commutation de déblocage, pour débloquer sélectivement l'accès à l'arbre (TW) de disjoncteur et à l'arbre (EW) de prise de terre du commutateur à plusieurs positions.
